# EUROPEAN PATENT APPLICATION

(11) **EP 1 873 618 A2**
(43) Date of publication of application: **02.01.2008**
(21) Application number: 07108652.4
(22) Date of filing: 22.05.2007
(51) Int. Cl.: G06F 3/023, G06F 3/03

(54) **Keypad touch user interface method and mobile terminal using the same**

(30) Priority: 26.06.2006 KR 20060057388
(71) Applicant: Samsung Electronics Co., Ltd., Suwon-si, Gyeonggi-Do (KR)
(72) Inventor: Kang, Tae Young, unknown (KR); Hong, Nho Kyung, unknown (KR); Lee, Chang Hoon, unknown (KR); Lee, Bong Won, unknown (KR)
(74) Representative: Grünecker, Kinkeldey, Stockmair & Schwanhäusser Anwaltssozietät

(57) **Abstract**

A keypad touch user interface method and a mobile terminal using the same are disclosed. If a touch is generated by a finger operation on a keypad installed with a touch sensor, the touch sensor detects the touch and a control unit identifies the type of the touch. According to the type of the touch, the control unit controls the display of a pointer on a display unit or displays an option window on the display unit. According to the result of identifying the type of the touch, if a new touch is generated by a finger in the state that another finger is touching a position on the keypad, the option window is displayed as with a right-click function of a mouse in a personal computing environment.

## Description

### BACKGROUND OF THE INVENTION

### 1. Field of the Invention

The present invention relates generally to a user interface in a mobile terminal, and in particular, to a keypad touch user interface method by using fingers and a mobile terminal using the same.

### 2. Description of the Prior Art

In view of recent developments of technology in mobile terminals, such as mobile phones and personal digital assistants, they have become widely used in daily life. In light of popularization of mobile terminals, user requirements have diversified and competition between suppliers of mobile terminals is high. Accordingly, mobile terminals providing more functions and improved convenience are continuously being developed. Particularly by adding various multimedia functions and wireless Internet functions to the mobile terminals, the operation environment of the mobile terminals is now being improved to the level of personal computing.

The sizes of mobile terminals are relatively small, because the mobile terminals must basically be portable. Therefore, the sizes of input and output units such as keypads and LCD screens are limited. In order to improve user accessibility and convenience in performing various and complicated functions of a mobile terminal under this limitation, a new user interface must be developed in consideration of the above. Further, necessity for a suitable user interface is also increasing, because of the requirement for an operation environment similar to a personal computing environment, when compared to the operation environment of conventional mobile terminals.

Among various methods for user interface, a method using a touch screen has been suggested. This method has advantages in user accessibility and convenience, because a menu on a screen may directly be selected and executed by using a stylus pen. However, this method has disadvantages that a user must always carry the stylus pen, the mobile terminal cannot be operated with only one hand, and the operation is limited if the stylus pen is missing.

In this method, either a normal keypad, or a virtual keypad displayed on a screen, is used to input characters or numbers. However, operation of the normal keypad is complicated, because the stylus pen on a screen and the normal keypad must be operated alternatively. The virtual keypad requires a precise operation, because an input window is small due to the virtual keypad occupying a portion of a screen and thereby having itself only a relatively small size.

### SUMMARY OF THE INVENTION

The present invention has been made in view of the above problems, and an object of the present invention is to provide a user interface suitable for performing various functions with improved user accessibility and convenience in a mobile terminal.

Another object of the present invention is to provide a new user interface in a mobile terminal by replacing a conventional method using a touch screen and a stylus pen.

Another object of the present invention is to provide a user interface enabling easier operation with one hand in a mobile terminal.

Another object of the present invention is to provide a user interface enabling an operation environment of a mobile terminal similar to a personal computing environment.

In order to achieve the above objects, the present invention provides a keypad touch user interface method and a mobile terminal using the same.

A user interface method according to the present invention includes detecting a first touch generated at a first position on a keypad; detecting a second touch generated at a second position on the keypad, which is different from the first position; and displaying an option window on a display unit.
Preferably, the second touch is additionally detected in the state that the first touch is detected. A touch sensor installed under the keypad can function for detecting the first touch and detecting the second touch.
The display unit displays a pointer, and the position of the pointer is preferably linked with the first position. An absolute coordinate system or a relative coordinate system can be used for interfacing the position of the pointer.
A user interface method in a mobile terminal having a touch sensor installed under a keypad, a pointer displayed on a display unit, and an option window, according to the present invention, includes detecting a touch on the keypad with the touch sensor; converting the detected touch to a touch signal; identifying the type of the touch from the touch signal; and displaying, if more than one touch signals is identified as the result of identifying the type of the touch, an option window on the display unit.
The user interface method further includes controlling, if only one touch signal is identified as the result of identifying the type of the touch, the position and operation of the pointer on the display unit.

A user interface method in a mobile terminal having a touch sensor installed under a keypad, a pointer displayed on a display unit, and an option window, according to the present invention, includes detecting a touch on the keypad with the touch sensor and converting the touch to a touch signal; identifying from the touch signal whether the touch is a first touch or a second touch; controlling, if the touch is a first touch, the position and operation of the pointer on the display unit; and displaying, if the touch is a second touch, an option window on the display unit.

In the user interface method, the touch is identified as a first touch, if a touch is generated only at one position; and a touch generated at a new position is identified as a second touch, if two touches are generated at two different positions.

The controlling step includes interfacing a first touch position with a pointer position. The displaying step displays the option window at the position of the pointer, and further includes, before displaying the option window, identifying whether an option executable at the position of the pointer is available.

A mobile terminal according to the present invention includes a keypad disposed with alphanumeric keys; a touch sensor installed under the keypad for detecting a touch; and an option controller for displaying, if two touches are generated at two different positions, an option window on a display unit.

Preferably, the mobile terminal further includes a pointer controller for interfacing, if a touch is generated at a position on the keypad, the touch position with a position of a pointer displayed on the display unit.

A mobile terminal according to the present invention includes a keypad disposed with alphanumeric keys; a touch sensor installed under the keypad for detecting a touch on the keypad and converting the touch to a touch signal; a touch identifier for identifying the type of the touch signal; a display unit having a pointer displayed according to the touch signal and an option window; a pointer controller for interfacing the detected touch position with the pointer position and controlling, if the touch is a first touch, the display of the pointer; and an option controller for controlling, if the touch is a second touch, the display of the option window.

In the mobile terminal, the touch sensor substantially occupies the same location as the keypad. The touch sensor has a touch detector for detecting a change of physical property of the touch and a signal converter for converting the change of physical property to the touch signal. The touch sensor is preferably partitioned into a plurality of areas.

### BRIEF DESCRIPTION OF THE DRAWINGS

The above and other obj ects, features and advantages of the present invention will become more apparent from the following detailed description in conjunction with the accompanying drawings, in which:
FIG. 1 is a block diagram showing a configuration of a mobile terminal according to the present invention;
FIG. 2 is a flow chart showing a user interface method according to the present invention;
FIG. 3 is a view showing an example of operation by using the user interface method of FIG. 2; and
FIGS. 4A to 4C are views showing other examples of operation using the user interface method of FIG. 2.

### DETAILED DESCRIPTION OF PREFERRED EMBODIMENTS

Hereinafter, the present invention is described in detail with reference to the accompanying drawings. The same reference numbers are used for the same or like components in the drawings. Additionally, detailed explanations of well-known functions and compositions may be omitted to avoid obscuring the subject matter of the present invention.

### Definition of Terms

1. "Keypad" applied to the present invention is not a virtual keypad displayed on an liquid crystal display (LCD), but a normal alphanumeric keypad formed on a mobile terminal body.
2. "Touch" means a behavior in which a user contacts a keypad of a mobile terminal with a finger.
   (1) "First touch" is a single touch generated at a position on a keypad.
   (2) "Second touch" is a touch generated following a first touch in the case that two touches are generated at two different positions on a keypad. However, the first touchmust be continued until the second touch is generated. A touch generated after the first touch disappears is a first touch.
3. "Press" is a user's behavior of operating a normal keypad by applying a force to a specific key with a finger.

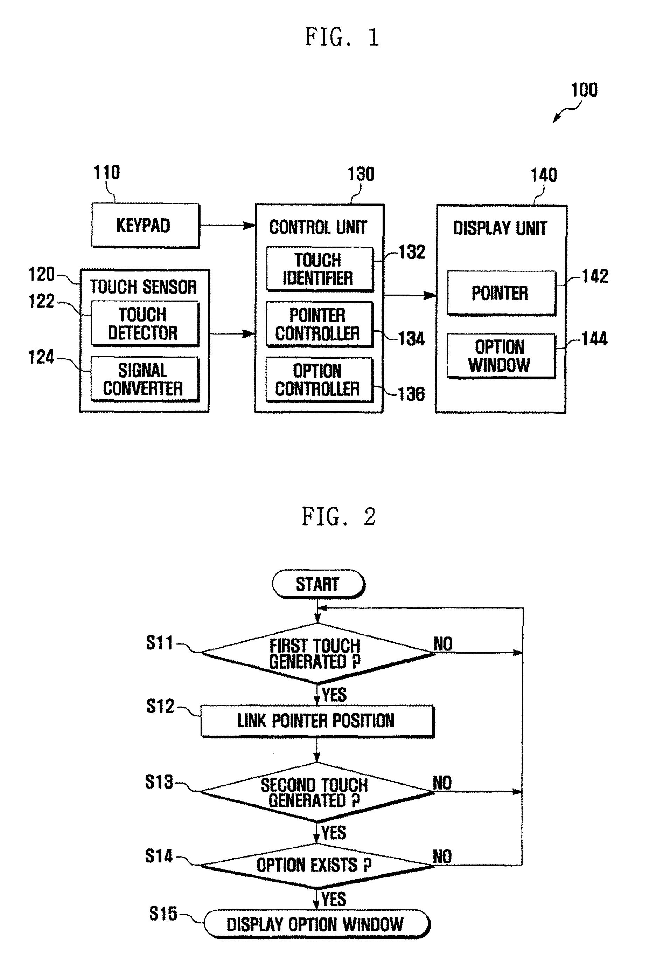

FIG. 1 is a block diagram showing a configuration of a mobile terminal according to the present invention.

Referring to FIG. 1, a mobile terminal 100 includes a keypad 110, touch sensor 120, control unit 130, and display unit 140. The touch sensor 120 includes a touch detector 122 for detecting a change of a physical property according to a touch and a signal converter 124 for converting the change of physical property to a touch signal. The control unit 130 includes a touch identifier 132, a pointer controller 134, and an option controller 136. The display unit 140 includes a pointer 142 and an option window 144, similar to that in a personal computer.

The keypad 110 is a portion of a key input unit formed on a specific area of a mobile terminal body, and alphanumeric keys are disposed on the keypad 110 in a format of 3 columns x 4 rows or 5 columns x 4 rows. The keypad 110 inputs characters or numbers by a user's normal operation of pressing, or short cut commands for performing special functions.

The touch sensor 120 is installed under the keypad 110, and preferably occupies the same location as that formed with the keypad 110. The touch sensor 120 is a type of pressure sensor, such as a gliding sensor, and various types of touch sensor may be used. The touch sensor 120 detects, if a user performs a touch operation on the keypad 110, generation of the touch by detecting a change of physical properties such as resistance and capacitance. The detected change of the physical property is converted to an electric signal (hereinafter, a touch signal). The touch signal generated by the touch and detected by the touch sensor 120 is transmitted to the touch identifier 132 of the control unit 130.

The touch sensor 120 is partitioned into a plurality of physical or virtual areas. Therefore, if a touch is generated, the corresponding position of the touch may be identified. Position information is transmitted to the control unit 130 together with the touch signal. The touch signal controls the operation of the pointer 142 in the display unit 140, and is used as an input signal for displaying the option window 144. The touch signal generated by touching the keypad 110 is completely different from a normal input signal generated by pressing the keypad 110. Apart from a function allocated to a normal keypad input signal, a function for a pointer control and option window display may be allocated to the touch signal.

The control unit 130 controls general operation of the mobile terminal 100. The touch identifier 132 receives a touch signal transmitted by the touch sensor 120, and identifies the type of the touch signal (i.e. first touch signal or second touch signal). If the touch is identified as a first touch signal, the pointer controller 134 links the position of the first touch signal generated by the keypad 110 with the position of the pointer in the display unit 140 and controls the display of the pointer 142 by using the position information transmitted with a touch signal. If the touch signal is identified as a second touch signal, the option controller 136 identifies whether an executable option is available, and displays option window 144 on the display unit 140.

The display unit 140 displays various menus for the mobile terminal 100, information input by a user, and information to be provided for the user. The display unit 140 may be formed with an LCD. A position of the pointer 142 is linked with a position of the first touch by the pointer controller 134, and the display of the pointer 142 is determined by a position change of the first touch (i.e. a change of position information corresponding to a touch signal). The option window 144 is a type of pop-up window listing various selectable menus, and it appears on the display unit 140 according to the control of the option controller 136.

A user interface method according to the present invention is described in detail as follows.

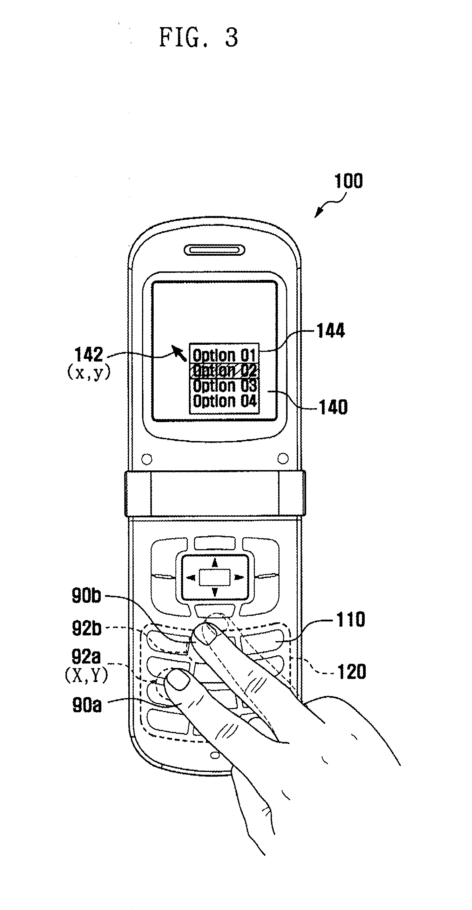

FIG. 2 is a flow chart showing a user interface method according to the present invention. FIG. 3 is a view showing an example of an operation using the user interface method of FIG. 2.

Referring to FIGS. 1 to 3, in step S11, the first step detects generation of a first touch.

If a user touches a point 92a (first point) of the keypad 110 with a finger 90a (first finger), the touch detector 122 of the touch sensor 120 located under the keypad 110 detects a physical property change corresponding to the touch operation. The signal converter 124 converts the value of the physical property change to a touch signal, and transmits the touch signal to the control unit 130. At this moment, position information on the generated touch is also transmitted with the touch signal.

The touch identifier 132 of the control unit 130 receives the touch signal and position information, and identifies the type of the touch from the touch signal . Where only one touch signal is received (i.e., in the case that a touch is generated at a position on the keypad 110), the touch identifier 132 identifies the touch as a first touch.

In step S12, the first point 92a of the first touch is linked with the position of the pointer 142 .

The pointer controller 134 of the control unit 130 obtains a touch position (X, Y) of the first point 92a from the position information transmitted with the touch signal. The touch position (X, Y) corresponds to the position of the first finger 90a. Subsequently, the pointer controller 134 links the touch position (X, Y) of the first point 92a with a pointer position (x, y) of the pointer 142 displayed on the display unit 140.

As a method for linking a touch position (X, Y) with a pointer position (x, y), two methods using 2-dimensional coordinates are as follows . An absolute coordinate system links a touch position on the keypad 110 with a pointer position on the display unit 140 having the same coordinates. Alternatively, a relative coordinate system links an initial position of the first touch with a pointer position regardless of a touch position.

Step S13 detects generation of a second touch. In the state of touching the first point 92a with the first finger 90a, if a user touches another point 92b (hereinafter, second point) on the keypad 110 with another finger 90b (hereinafter, second finger), the touch detector 122 detects a physical property change according to the touch operation of the second finger 90b in the same manner as in the first touch, converts the physical property change to a touch signal, and transmits the touch signal to the control unit 130.

As described above, if another touch signal is received in the state of receiving the first touch signal, the touch identifier 132 identifies the touch signals as a second touch signal. That is, if two touch signals generated at two different points are simultaneously received, the touch identifier 132 identifies a touch signal received with new position information as a second touch signal. However, if a touch signal having new position information is received in the state that the first touch signal is no longer received, the touch signal is identified as a first touch signal.

Step S14 identifies whether an executable option is available .

If a second touch is generated, the option controller 136 of the control unit 130 identifies whether an option executable at the current position of the pointer 142 is available. Various types of screens can be output to the display unit 140 according to the operation status of the mobile terminal 100, and the pointer 142 can be located at any position on the screen. Menu items for executing a specific function of the mobile terminal 100 can be displayed on the screen of the display unit 140 in formats such as an icon and a text, and the status of executing the specific function can also be displayed. The pointer 142 can be located at a menu item or at any other position.

According to the position of the pointer 142, an executable option may be available or unavailable. Accordingly, the option controller 136 identifies in advance, if a second touch is generated, whether an option is available. If an executable option is always available regardless of the position of the pointer 142, the step S14 can be omitted.

Step S15 displays the option window 144 . If a second touch is generated and an executable option is available, the option controller 136 displays the option window 144 on the display unit 140. This corresponds to a right-click of a mouse in a typical personal computing environment, and the option window 144 is displayed at a position where the pointer 142 is currently located.

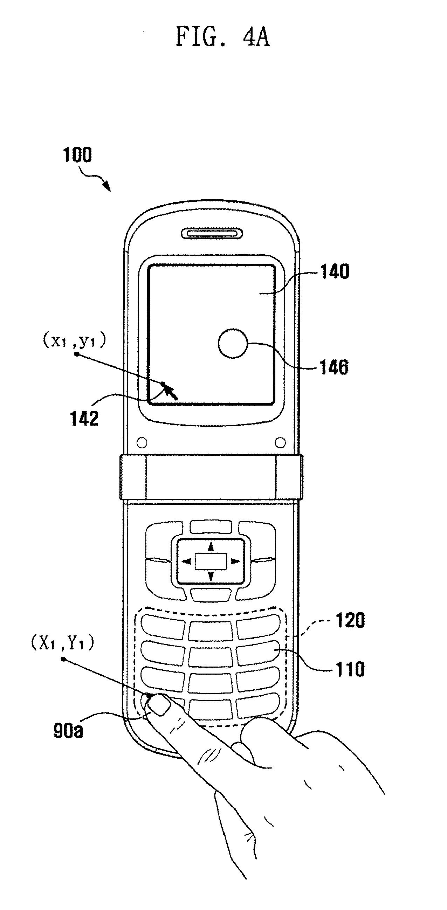

FIGS. 4A to 4C are views showing other examples of operation using the user interface method of FIG. 2.

Referring to FIG. 4A, when the first finger 90a touches a first point on the keypad 110, the touch sensor 120 detects the touch point and transmits, to the control unit 130, a touch signal and the information on a touch position(X₁, Y₁) of the first point. If the type of the touch signal is identified as a first touch by the touch identifier 132 of the control unit 130, the pointer controller 134 of the control unit 130 links the touch position (X₁, Y₁) of the first touch point with a pointer position(x₁, y₁) of the pointer 142. The step of interfacing is continuously repeated until a touch signal identified as a second touch is received. In Fig. 4A, a reference number 146 indicates an executable menu item.

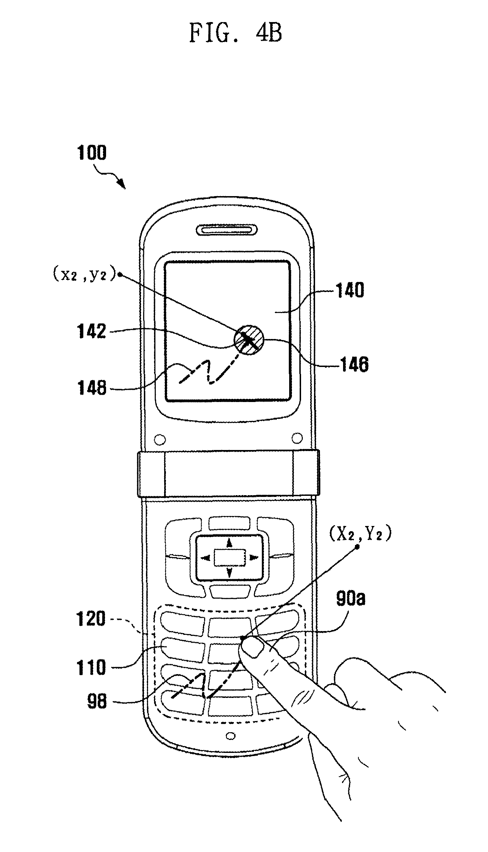

Referring to FIG. 4B, if position information changes continuously while receiving the first touch signal, the position of the pointer 142 changes continuously and correspondingly. That is, if the position changes to a touch position (X₂, Y₂) of the second point in the state that the first finger 90a touches the keypad 110, the pointer 142 moves to a pointer position (x₂, y₂) . In this step, a path 98 through which the first finger 90a moves corresponding to a path 148 through which the pointer 142 moves. In this situation, the first touch signal is defined as an input signal for controlling the pointer 142 by using the position information.

Selection of a menu item can be set if the pointer 142 stops at the menu item longer than predetermined time duration (i.e. if a first touch signal is continuously received without a position information change). Alternatively, selection of a menu item can be set if a first touch signal having the same position information is received repeatedly (i.e. if the first finger 90a presses the same position once more). Further, selection of a menu item can be set if a second touch signal is received regardless of the above two conditions. In any case, the menu item 146 before selection shown in FIG. 4A and the menu item 146 after selection shown in FIG. 4B can be displayed in different forms from each other.

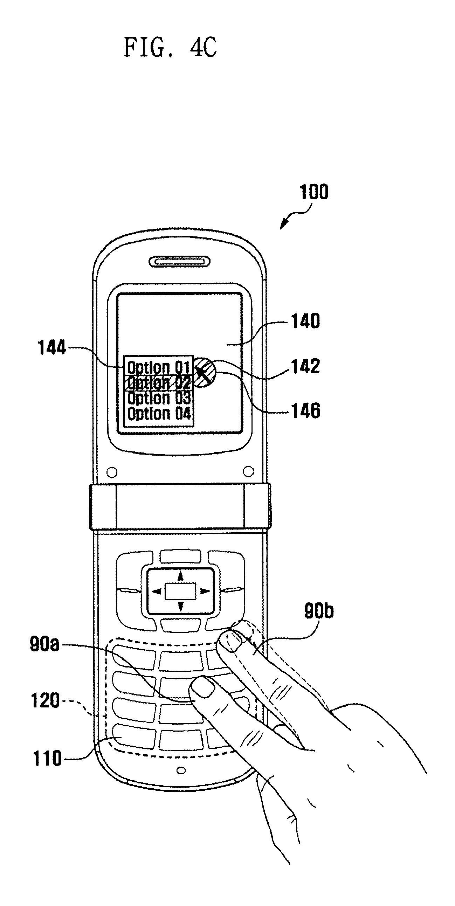

Referring to FIG. 4C, if the second finger 90b touches a point different from the first touch point in the state that the first finger 90a touches the keypad 110, the touch sensor 120 detects the touch point and transmits a touch signal to the control unit 130. If two touch signals different from each other are simultaneously transmitted, the touch identifier 132 of the control unit 130 identifies the touch signal received with new position information as a second touch.

If the second touch is detected, the option controller 136 of the control unit 130 identifies whether an option executable at the current position of the pointer 142 is available. In FIG. 4C, the option controller 136 identifies whether the selected menu item 146 has an option. If an executable option is available, the option controller 136 displays the option window 144 on the display unit 140.

An additional function can be set to scroll the menu items in the option window 144 when the second finger 90a moves upwards or downwards in the state that an option window 144 is displayed. Alternatively, an additional function may be set to execute a selected menu in the option window 144 by pressing once or twice with the second finger 90a. Similarly, an additional function can be set to execute the selected menu item 146 by pressing once or twice with the first finger 90a before displaying an option window 144.

The present invention provides a user interface executing a predetermined function by detecting a touch and identifying the type of the touch when a user touches a keypad installed with a touch sensor by using their fingers. The user interface utilizing a keypad touch method is suitable for execution of various applications in a mobile terminal, because it enables execution of a normal function of a keypad press operation and an additional function.

In particular, the user interface according to the present invention enables operation control of a pointer and display of an option window on a display unit by using a keypad touch. Accordingly, the present invention provides an operation environment of a mobile terminal close to a personal computing environment, simplicity in use even in a screen having a complicated option structure, and excellent user accessibility and convenience. The user interface according to the present invention can provide an optimized method for one of a browser and GPS navigation environments.

In the user interface according to the present invention, operation on both a keypad area and a display area are not required because operation of a mobile terminal is performed only in a keypad area different than the conventional touch screenmethod. Accordingly, the user interface according to the present invention provides a much simpler operation compared to a conventional method, and operation with one hand is possible, because use of a stylus pen is unnecessary. Further, the user interface according to the present invention has an effect of cost saving compared to a conventional touch screen method.

Although preferred embodiments of the present invention have been described in detail herein-above, it should be understood that many variations and/or modifications of the basic inventive concept herein described, which may appear to those skilled in the art, will still fall within the spirit and scope of the present invention as defined in the appended claims.

## Claims

1. A user interface method in a mobile terminal, comprising:
detecting a first touch generated at a first position on a keypad;
detecting a second touch generated at a second position on the keypad, which is different from the first position; and
displaying an option window on a display unit.

2. The user interface method of claim 1, wherein the second touch is additionally detected in the state that the first touch is detected.

3. The user interface method of claim 1, wherein detecting the first touch and detecting the second touch are performed by a touch sensor installed under the keypad.

4. The user interface method of claim 1, wherein the display unit displays a pointer and the position of the pointer is linked with the first position.

5. The user interface method of claim 4, wherein one of an absolute coordinate system and a relative coordinate system is used for linking the position of the pointer.

6. A user interface method in a mobile terminal having a touch sensor installed under a keypad, a pointer displayed on a display unit, and an option window, comprising:
detecting a touch on the keypad with the touch sensor;
converting the detected touch to a touch signal;
identifying the type of the touch from the touch signal; and
displaying, if two touch signals are identified as the result of identifying the type of the touch, an option window on the display unit.

7. The user interface method of claim 6, further comprising controlling, if only one touch signal is identified as the result of identifying the type of the touch, the position and operation of the pointer on the display unit.

8. A user interface method in a mobile terminal having a touch sensor installed under a keypad, a pointer displayed on a display unit, and an option window, comprising:
a) detecting a touch on the keypad with the touch sensor and converting the touch to a touch signal;
b) identifying from the touch signal whether the touch is a first touch or a second touch;
c) controlling, if the touch is a first touch, the position and operation of the pointer on the display unit; and
d) displaying, if the touch is a second touch, an option window on the display unit.

9. The user interface method of claim 8, wherein, if a touch is generated only at one position, step b) identifies the touch as a first touch.

10. The user interface method of claim 8, wherein, if two touches are generated at two different positions, step b) identifies a touch generated at a new position as a second touch.

11. The user interface method of claim 8, wherein step c) comprises interfacing a first touch position with a pointer position.

12. The user interface method of claim 8, wherein step d) displays the option window at the position of the pointer.

13. The user interface method of claim 8, wherein step d) further comprises, before displaying the option window, identifying whether an option executable at the position of the pointer is available.

14. A mobile terminal comprising:
a keypad disposed with alphanumeric keys;
a touch sensor installed under the keypad for detecting a touch on the keyboard; and
an option controller for displaying, if two touches are generated at two different positions of the keypad, an option window on a display unit.

15. The mobile terminal of claim 14, further comprising a pointer controller for linking, if a touch is generated at a position of the keypad, the position of the touch with a position of a pointer displayed on the display unit.

16. A mobile terminal comprising:
a keypad disposed with alphanumeric keys;
a touch sensor installed under the keypad for detecting a touch on the keypad and converting the touch to a touch signal;
a touch identifier for identifying the type of the touch signal;
a display unit having a pointer displayed according to the touch signal and an option window;
a pointer controller for linking the detected touch position with the pointer position and controlling, if the touch is a first touch, the display of the pointer; and
an option controller for controlling, if the touch is a second touch, the display of the option window.

17. The mobile terminal of claim 16, wherein the touch sensor substantially occupies the same location as the keypad.

18. The mobile terminal of claim 16, wherein the touch sensor has a touch detector for detecting a change of physical property of the touch and a signal converter for converting the change of physical property to the touch signal.

19. The mobile terminal of claim 16, wherein the touch sensor is partitioned into a plurality of areas.
